**Europäisches Patentamt**

(19) **European Patent Office**

**Office européen des brevets**

(11) Veröffentlichungsnummer : **0 141 969**
**B1**

(12) **EUROPÄISCHE PATENTSCHRIFT**

(45) Veröffentlichungstag der Patentschrift :
23.12.87

(51) Int. Cl.⁴ : **H 04 N 7/13**

(21) Anmeldenummer : **84111013.3**

(22) Anmeldetag : **14.09.84**

(54) **Verfahren und Schaltungsanordnung zur Verbesserung der Bildqualität durch aktivitätsgesteuerte DPCM-Codierung.**

(30) Priorität : **15.09.83 DE 3333404**

(43) Veröffentlichungstag der Anmeldung :
**22.05.85 Patentblatt 85/21**

(45) Bekanntmachung des Hinweises auf die Patenterteilung : **23.12.87 Patentblatt 87/52**

(84) Benannte Vertragsstaaten :
**AT CH DE FR IT LI**

(56) Entgegenhaltungen :
**GB-A- 2 102 652**
**US-A- 4 144 543**
**US-A- 4 371 895**
**THE BELL SYSTEM TECHNICAL JOURNAL, Band 61, Nr. 5, Mai/Juni 1982, Seiten 747-764, Murray Hill, N.J., USA; P. PIRSCH: "Adaptive intra-interfram DPCM coder"**

(73) Patentinhaber : **Siemens Aktiengesellschaft Berlin und München**
**Wittelsbacherplatz 2**
**D-8000 München 2 (DE)**

(72) Erfinder : **Starck, Alexander, Dipl.-Phys.**
**Terhallestrasse 45**
**D-8000 München 90 (DE)**

EP 0 141 969 B1

## Beschreibung

Die Erfindung betrifft ein Verfahren zur Verbesserung der Bildqualität von Fernsehsignalen bei aktivitätsgesteuerter DPCM-Codierung, bei dem aus den umgebenden Bildsignalwerten des aktuellen Abtastwertes und aus den diesen umgebenden Bildsignalwerten des vorangegangenen Fernsehhalbbildes ein Schätzwert zur Ermittlung des DPCM-Signalwertes errechnet wird, bei dem aus den den aktuellen Abtastwert umgebenden Bildsignalwerten desselben Fernsehhalbbildes und aus den den aktuellen Abtastwert umgebenden Bildsignalwerten des vorangegangenen Fernsehhalbbildes ein Aktivitätskriterium durch Berechnung der Amplitudendifferenzen ermittelt wird und bei einem Aktivitätskriterium unterhalb eines ersten Schwellwertes der Schätzwert aus den Bildsignalwerten des vorangegangenen Fernsehhalbbildes verwendet wird sowie eine Schaltungsanordnung zur Realisierung des Verfahrens.

Die mit bekannten DPCM-Verfahren erreichte Bildqualität ist bei geringen Übertragungsraten von beispielsweise 34 Mbit/s bei zweidimensionaler Berechnung des Schätzwertes nicht immer zufriedenstellend. Durch die Hinzunahme von Bildsignalwerten des vorangegangenen Fernsehhalbbildes (Interfield-DPCM) läßt sich bei ruhenden Bildern eine Verbesserung erzielen.

Im « The Bell System Technical Journal », Band 61, Nr. 5, Mai/Juni 1982 sind adaptive DPCM-Coder beschrieben, bei denen einer von mehreren Prädiktoren ausgewählt wird oder die Koeffizienten des Prädiktors geändert werden.

Die Prädiktorsteuerung erfolgt durch die Ermittlung des kleinsten Vorhersagefehlers bei den bereits übertragenen benachbarten Werten. Dies Verfahren erfordert jedoch einen enormen Rechenaufwand und eine realisierbare Schaltung ist nicht angegeben.

In einem CCIR-Document 11/CMTT des CCIR Study Groups, Period 1978-1982, Study Programme 25A/11 (Mod I) « Getrennte Codierung von Farbfernsehsignalen mit 34 Mbit/s » wurde die von der Aktivität, d. h. vom Kontrast zwischen einander entsprechenden Bildpunkten zeitlich aufeinanderfolgender Fernsehsignale abhängige Codierung untersucht.

Das vorgeschlagene Verfahren erfordert einen erheblichen Rechenaufwand.

Aufgabe der Erfindung ist es, ein einfach realisierbares Verfahren zur Verbesserung der Bildqualität bei DPCM-codierten Fernsehsignalen anzugeben.

Ausgehend vom einleitend beschriebenen Stand der Technik wird diese Aufgabe dadurch gelöst, daß bei Überschreitung eines zweiten Schwellwertes durch den Betrag des Aktivitätskriteriums der Schätzwert aus den Bildsignalwerten des aktuellen Fernsehhalbbildes verwendet wird, daß bei einem Betrag des Aktivitätskriteriums zwischen den beiden Schwellwerten der Schätzwert aus den umgebenden Bildsignalwerten des aktuellen und des vorangegangenen Fernsehhalbbildes errechnet wird und daß zur Berechnung des Aktivitätskriteriums die Bildsignalwerte mit Faktoren multipliziert werden.

Bei diesem Verfahren wird zunächst ermittelt, ob sich aufeinanderfolgende Fernsehhalbbilder eines betrachteten Ausschnittes voneinander unterscheiden. Bestehen nur kleine Unterschiede, so erfolgt die Ermittlung des Schätzwertes, auch als Vorhersagewert bezeichnet, allein aus dem vorangegangenen Fernsehhalbbild. Bei größeren Intensitätsunterschieden (Amplitudenunterschieden) benachbarter Bildsignalwerte des aktuellen und des vorangegangenen Fernsehhalbbildes erfolgt die Berechnung des Schätzwertes sowohl aus dem vorangegangenen als auch aus dem aktuellen Fernsehhalbbild. Bei sehr großen Intensitätsunterschieden zwischen aufeinanderfolgenden Fernsehhalbbildern erfolgt die Berechnung des Schätzwertes allain aus dem aktuellen Fernsehhalbbild. Die Intensitätsunterschiede werden auch als Aktivität bezeichnet.

Vorteilhaft ist dabei, daß gleichzeitig ein Vorhersagewert $x_0$ aus dem vorangegangenen Fernsehhalbbild und ein zweiter Vorhersagewert $x_1$ aus dem aktuellen Fernsehhalbbild berechnet werden. Je nach Größe eines aus aufeinanderfolgenden Teilfernsehhalbbildern ermittelten Aktivitätskriteriums wird zwischen den beiden Schätzwerden umgeschaltet oder es erfolgt eine Kombination aus beiden Schätzwerten.

Das Aktivitätskriterium kann durch Vergleich der räumlich benachbarten Bildsignalwerte, die Bildpunkten entsprechen, des aktuellen und des vorangegangenen Fernsehhalbbildes durch Differenzbildung ermittelt werden.

Es ist vorteilhaft, daß zur Berechnung des Schätzwertes die Bildsignalwerte mit Faktoren $1/2^n$ multipliziert werden.

Die Berechnung des Aktivitätskriteriums wird besonders einfach, wenn die jeweiligen Signalwerte nur durch 2, 4, 8 dividiert werden müssen. Dies bedeutet jeweils nur die bitweise Verschiebung des jeweiligen Bildsignalwertes nach rechts, bzw. eine entsprechende Art der Verdrahtung.

Es ist zweckmäßig, daß als Aktivitätskriterium $AK = |(1/4\ B + 1/2\ C + 1/4\ D) - 1/2(1/4\ H + 1/2\ I + 1/4\ J + 1/4\ K + 1/2\ L + 1/4\ M)|$ verwendet wird.

Diese Berechnung des Aktivitätskriteriums liefert ausreichend genaue Ergebnisse zur Bewertung der Intensitätsunterschiede aufeinanderfolgender Fernsehhalbbilder. Auf die Verwendung des zuletzt ermittelten Bildsignalwertes A wurde verzichtet, da nur eine geringe Rechenzeit zur Verfügung steht. Die Einbeziehung des zuletzt ermittelten Bildsignalwertes A ist jedoch möglich, wenn zunächst sämtliche Rechenoperationen, an denen die Bildsignalwerte ab B beteiligt sind, durchgeführt werden und anschließend der zuletzt ermittelte Bildsignalwert berücksichtigt wird.

Es ist vorteilhaft, daß bei einem vorgegebenen Wertevorrat der Bildsignalwerte der erste Schwellwert bei 1/8 und der zweite Schwellwert bei 1/4 des Wertevorrats liegt.

Die Schwellwerte von 32 und 64 sind digital einfach festzulegen. Bei dem vorgegebenen Wertevorrat von 256 liefern diese Schwellen günstige Ergebnisse zur Steuerung der Codierung.

Es ist vorteilhaft, daß aus den aktuellen Bildsignalwerten jeweils eine Summe $P = 1/4 B + 1/2 C + 1/4 D$ errechnet wird, daß diese Summe nahezu für die Dauer eines Halbbildes und zusätzlich zweimal einer Fernsehzeile gespeichert wird, und daß aus den gespeicherten Summen durch Multiplikation mit den Faktoren 1/4 und 1/2 das Aktivitätskriterium und der Schätzwert errechnet werden.

Hierdurch wird ein einfacher Schaltungsaufbau erreicht. Durch die Verzögerung liegen bereits alle zu Summen zusammengefaßten benötigten Bildsignalwerte (A, B, C, D ; E, F, G, H, ...) zur Berechnung des Aktivitätskriteriums und des Schätzwertes vor.

Weitere vorteilhafte Ausbildungen der Erfindung sind in den übrigen Unteransprüchen angegeben.

Die Erfindung wird anhand eines Ausführungsbeispiels näher erläutert.

Es zeigen

Fig. 1 ein Prinzipschaltbild zur Durchführung des erfindungsgemäßen Verfahrens,

Fig. 2 einen Ausschnitt aus einem Fernsehbild,

Fig. 3 eine Kennlinie zur gleitenden Codierung,

Fig. 4 eine realisierbare Schaltungsanordnung und

Fig. 5 ein als Rechenschaltung verwendetes digitales Filter.

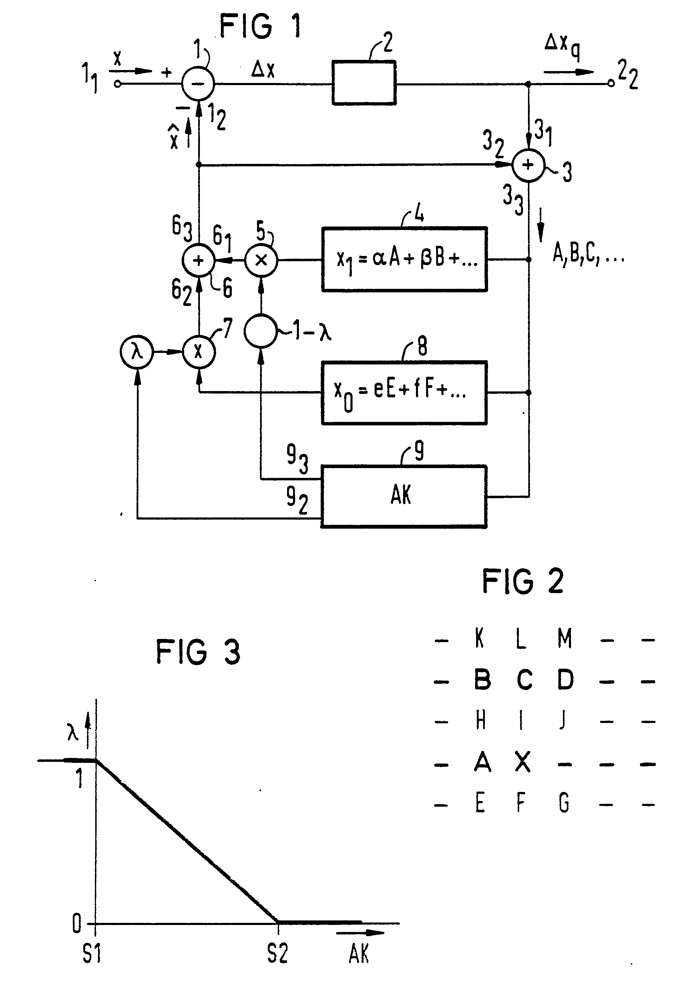

In Fig. 1 ist eine Codierungsschleife für eine dreidimensionale Codierung, d. h. für eine räumliche und zeitliche Codierung, dargestellt. Sie enthält einen Subtrahierer 1 mit einem Eingang $1_1$, über den die digitalisierten Abtastwerte x der Codierschleife zugeführt werden. Der Ausgang des Subtrahierers 1 ist mit dem Eingang eines Quantisierers 2 verbunden, dessen Ausgang $2_2$ mit einem ersten Eingang $3_1$ eines ersten Addierers 3 verbunden ist. Dessen Ausgang $3_3$ ist an die Eingänge eines Planarcodierers 4 und eines Interfield-Codierers 8 angeschaltet. Der Ausgang des Planarcodierers 4 ist über einen ersten Multiplizierer 5 mit dem ersten Eingang $6_1$ eines zweiten Addierers 6 verbunden ; der Ausgang des Interfield-Codierers 8 ist über einen zweiten Multiplizierer 7 mit dem zweiten Eingang $6_2$ des zweiten Addierers 6 verbunden. Der Ausgang $6_3$ des zweiten Addierers 6 ist mit einem zweiten Eingang $3_2$ des ersten Addierers 3 und dem Subtraktionseingang $1_2$ des Subtrahierers 1 verbunden. Der erste Multiplizierer 5 arbeitet mit einem festen Faktor $(1-\lambda)$, der zweite Multiplizierer 7 multipliziert die vom Interfield-Multiplizierer abgegebenen Daten mit dem Faktor $\lambda$.

Bisher bietet die Codierschleife keine Besonderheiten. Die Abtastwerte x werden mit dem errechneten Schätzwert $\hat{x}$ verglichen und die Differenz dieser beiden Werte $\Delta x$ dem Quantisierer 2 zugeführt, der an seinem Ausgang das quantisierte DPCM-Signal $\Delta X_q$ abgibt.

Der Schätzwert $\hat{x}$ setzt sich aus dem vom Planar-Codierer errechneten Vorhersagewert $x_1 = \alpha A + \beta B + \gamma D + \delta D$ und dem vom Interfield-Codierer errechneten Vorhersagewert $x_0 = eE + fF + gG + hH + iI + jJ + kK + lL + mM$ zusammen.

In Fig. 2 ist ein Ausschnitt aus einem Fernsehbild dargestellt. Die Bildpunkte, die einzelnen Signalwerten des aktuellen Fernsehhalbbildes entsprechen, wurden durch dicke Striche und dick ausgezogene Buchstaben dargestellt. Die entsprechenden Bildpunkte des vorangegangenen Fernsehhalbbildes wurden durch dünne Striche und dünn geschriebene Buchstaben markiert. Damit der Decodierer dieselbe Vorhersage machen kann wie der Codierer, darf dieser nicht mit den ursprünglichen Abtastwerten rechnen, sondern mit den Bildsignalwerten A, B, C ... vom sogenannten lokalen Ausgang $3_3$ des ersten Addierers 3. Anstelle der vorangegangenen Abtastwerte sind deshalb in Fig. 2 die entsprechenden Bildsignalwerte A, B, C, D und E bis M eingezeichnet.

Die Codierschleife nach Fig. 1 enthält außerdem eine Codiersteuerung 9, die (funktionell) an den Ausgang $3_3$ des Addierers 3 angeschaltet ist. Über ihre Ausgänge $9_2$ und $9_3$ werden die Faktoren $\lambda$ und $1-\lambda$ bestimmt.

In der Codiersteuerung 9 wird zunächst das Aktivitätskriterium $AK = |(1/4 B + 1/2 C + 1/4 D) - 1/2 (1/4 H + 1/2 I + 1/4 J + 1/4 K + 1/2 L + 1/4 M)|$ ermittelt. Aus Gründen der Rechengeschwindigkeit erfolgt dies durch eine an sich bekannte Hardware-Schaltung. Die Multiplikationen mit den Faktoren 1/2, 1/4 und 1/8 werden hierbei durch entsprechende Verdrahtung realisiert. Natürlich ist es nicht notwendig, die Bildsignalwerte nochmals in der Codiersteuerung zu speichern, da dies bereits im Planar-Codierer und im Interfield-Codierer ohnehin notwendig ist. Die Codiersteuerung enthält außerdem eine Schwellwertschaltung mit zwei Schwellen $S_1$ und $S_2$. Bleibt das ermittelte Aktivitätskriterium AK unterhalb des ersten Schwellwertes $S_1$, wo wird der Faktor $\lambda = 1$. Dies bedeutet nichts anderes, als daß der Vorhersagewert $x_0$ als Schätzwert $\hat{x}$ verwendet wird. Ergibt sich ein Aktivitätskriterium zwischen den zwei Schwellwerten, so wird $\lambda = 1/2$ gewählt, dies bedeutet, daß beide Vorhersagewerte $x_0$ und $x_1$ zu gleichen Teilen zum Schätzwert $\hat{x}$ beitragen. Wird dagegen der zweite Schwellwert $S_2$ von dem Aktivitätskriterium überschritten, so wird der Faktor $\lambda = 0$ und somit nur der vom Planarcodierer abgegebene Vorhersagewert $x_1$ für die Berechnung des DPCM-Signals verwendet.

Eine interessante Variante ermöglicht den gleitenden Übergang zwischen beiden Codierungsarten in Abhängigkeit von dem Aktivitätskriterium. Eine entsprechende Kennlinie ist in Fig. 3 dargestellt. Unterhalb des ersten Schwellwertes ist $\lambda = 1$, oberhalb des Schwellwertes sinkt $\lambda$ bis zum zweiten Schwellwert $S_2$ stetig ab, um nach Überschreitung des zweiten Schwellwertes $S_2$ auf 0 zu bleiben. Die

Kennlinie nach Fig. 3 kann durch eine Stufenfunktion angenähert werden. Hierdurch wird der Rechen- bzw. Schaltungsaufwand geringer. Diese Variante bringt nochmals eine geringfügige Verbesserung der Bildqualität.

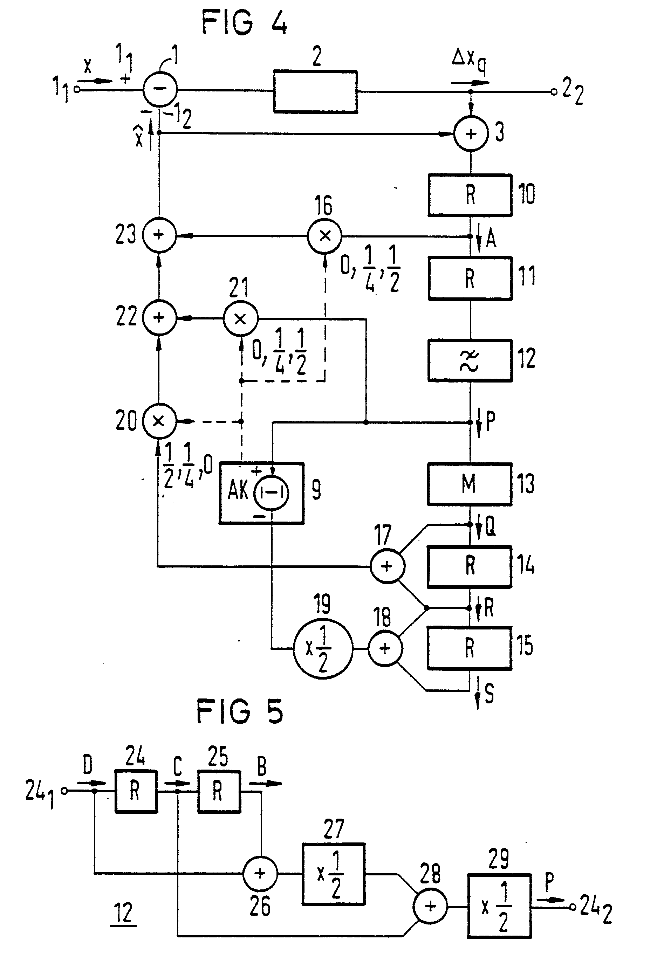

In Fig. 4 ist eine realisierbare Schaltungsanordnung für $\lambda = 0$, 1/2 und 1 beschrieben. Diese Schaltungsanordnung enthält entsprechend Fig. 1 wiederum den Subtrahierer 1, den Quantisierer 2 und den ersten Addierer 3. Der Ausgang des Addierers 3 ist über ein erstes Register 10 mit einem weiteren Zeilenregister 11 verbunden, durch das die Bildsignalwerte um nahezu eine Fernsehzeile verzögert werden. Der Ausgang des Zeilenregisters 11 ist mit einem digitalen Filter 12 verbunden, dessen Ausgang mit einem Halbbildspeicher 13, der Codiersteuerung 9 und einem dritten Multiplizierer 21 verbunden ist. An den Ausgang des Halbbildspeichers 13 sind zwei weitere Zeilenregister 14 und 15 in Reihe angeschlossen, durch die die anliegenden Signale ebenfalls jeweils um eine Fernsehzeile verzögert werden. Der Ausgang des Halbbildspeichers 13 und der Ausgang des zweiten Zeilenregisters 14 sind über einen dritten Addierer 17 zusammengefaßt, dessen Ausgang über einen zweiten Multiplizierer 20, einen vierten Addierer 22 und einen fünften Addierer 23 an den Subtraktionseingang 1/2 des Subtrahierers 1 angeschlossen ist. Der Ausgang des dritten Multiplizierers 21 ist an den zweiten Eingang des vierten Addierers 22 angeschlossen, ein vierter Multiplizierer 16 ist zwischen dem Ausgang des ersten Registers 10 und dem zweiten Eingang des fünften Addierers 23 angeschlossen, dessen Ausgang außerdem mit dem zweiten Eingang des ersten Addierers 3 verbunden ist. Der Ausgang des zweiten Zeilenregisters 14 und der Ausgang des dritten Zeilenregisters 15 sind über einen sechsten Addierer 18 zusammengefaßt, dessen Ausgang über einen ersten Multiplizierer 19 mit einem zweiten Eingang der Codiersteuerung 9 verbunden ist. Die Steuerausgänge der Codiersteuerung 9 greifen in den zweiten Multiplizierer 20, die dritten Multiplizierer 21 und einen vierten Multiplizierer 16 ein. Als Faktoren sind jeweils unabhängig voneinander 0, 1/4 und 1/2 einstellbar. Der vierte Multiplizierer 16 liegt zwischen dem ersten Register 10 und dem zweiten Eingang des Addierers 23. Durch das digitale Filter 12 wird ein Produkt $P = 1/4\,B + 1/2\,C + 1/4\,D$ errechnet. Dieser Augenblick ist in Figur 5 dargestellt. Am Ausgang des Halbbildspeichers 13 liegt dann durch die Verzögerung entsprechend Figur 4 $Q = 1/4\,E + 1/2\,F + 1/4\,G$, am Ausgang des zweiten Zeilenregisters 14 liegt $R = 1/4\,H + 1/2\,I + 1/4\,J$ und am Ausgang des dritten Zeilenregisters 15 liegt $S = 1/4\,K + 1/2\,L + 1/4\,M$. Diese Produkte sind somit jeweils von einer Zeile der Figur 2 abgeleitet. Zunächst wird das Aktivitätskriterium in den Codiersteuerung ermittelt. Davon abhängig werden die drei Multiplizierer 20, 21 und 16 so gesteuert, daß jeweils der gewünschte Schätzwert — je nach Größe des Aktivitätskriteriums — errechnet wird. Liegt das Aktivitätskriterium unterhalb der ersten Schwelle $S_1$, so erfolgt die Ermittlung des Schätzwertes $\hat{x} = x_0$ ausschließlich aus den Bildsignalwerten E bis J des letzten Fernsehhalbbildes. Daher wird der Multiplikator des vierten Multiplizierers 16 und des dritten Multiplizierers 21 gleich Null, während der zweite Multiplikator 20 seine Eingangswerte mit 1/2 multipliziert. Hierdurch wird der Vorhersagewert $x_0$ als Schätzwert errechnet.

Ist der erste Schwellwert $S_1$ überschritten, dann werden von den Multiplizierern 20, 21 und 16 alle Eingangswerte mit dem Faktor 1/4 multipliziert, ist auch der zweite Schwellwert überschritten, so wird der Schätzwert nur aus den Bildsignalwerten des aktuellen Fernsehhalbbildes errechnet; der zweite Multiplizierer 20 multipliziert dann seine Eingangswerte mit dem Faktor 0.

Die Multiplikation mit dem Faktor 1/2 bedeutet lediglich eine Bitverschiebung bei dem entsprechenden Codewort nach rechts, bei dem Faktor 1/4 erfolgt eine weitere Verschiebung um nochmals ein Bit. Die Multiplizierer sind daher durch einfache Umschalter realisierbar. Bei dem Faktor 0 werden die Ausgänge der Multiplizierer auf Null gelegt oder es erfolgt die Umschaltung auf ein vorgegebenes Potential. Der Faktor 1/2 bei dem ersten Multiplizierer 19 wird bereits durch eine entsprechende um ein Bit verschobene Verdrahtung beim Addierer 18 erreicht; dieser Multiplizierer wird bei dem realen Aufbau einer Schaltung nicht benötigt. Auch die Bildung des Aktivitätskriteriums AK bereitet keine Schwierigkeiten. Von dem Wert P wird der Wert $1/2(S + R)$ subtrahiert und, falls notwendig, bei einem negativen Vorzeichen der Betrag gebildet (invertiert).

Das in Fig. 5 dargestellte digitale Filter 12 enthält zwei in Reihe geschaltete weitere Register 24 und 25, die jeweils eine Verzögerung um einen Bildsignalwert bewirken. Der Eingang $24_1$ des ersten weiteren Registers 24 und der Ausgang des zweiten weiteren Registers 25 sind über einen siebten Addierer 26 mit nachgeschaltetem Multiplizierer 27 zusammengefaßt. Der Ausgang des Multiplizierers 27 und der Ausgang des ersten weiteren Registers 24 sind über einen achten Addierer 28 zusammengefaßt, dessen Ausgang über einen nachgeschalteten Multiplizierer 29 verbunden ist, dessen Ausgang den Ausgang $24_2$ des digitalen Filters bildet.

Beide Multiplizierer 27 und 29 multiplizieren mit dem Faktor 1/2. Bei einer Realisierung sind diese Multiplizierer überflüssig, da der Faktor 1/2 durch eine entsprechende, um jeweils ein Bit versetzte Verdrahtung bei den weiteren Addierern 26 und 28 erzielt werden kann.

Betrachtet man einen Zeitpunkt, der dem in Fig. 4 dargestellten Zeitpunkt entspricht, so werden durch das digitale Filter gerade die Bildsignalwerde B, C und D verarbeitet. Wie man aus der Schaltung leicht sieht, ergibt sich am Ausgang der Wert $P = 1/4\,B + 1/2\,C + 1/4\,D$.

Dadurch, daß derselbe Wert P, wie bei der Figur 4 bereits beschrieben, wieder verwendet wird und nur mit einfachen Faktoren bewertet wird, bleibt der Schaltungsaufwand gering.

# 0 141 969

**Patentansprüche**

1. Verfahren zur Verbesserung der Bildqualität von Fernsehsignalen bei aktivitätsgesteuerter DPCM-Codierung, bei dem aus den umgebenden Bildsignalwerten (A, B, C, D) des aktuellen Abtastwertes (x) und aus den diesen umgebenden Bildsignalwerten (E, F, G ...) des vorangegangenen Fernsehhalbbildes ein Schätzwert ($\hat{x}$) zur Ermittlung des DPCM-Signalwertes ($\Delta x$) errechnet wird, bei dem aus den den aktuellen Abtastwert (x) umgebenden Bildsignalwerten (A, B, C, D) desselben Fernsehhalbbildes und aus den den aktuellen Abtastwert (x) umgebenden Bildsignalwerten (E, F, G ...) des vorangegangenen Fernsehhalbbildes ein Aktivitätskriterium (AK) durch Berechnung der Amplitudendifferenzen ermittelt wird und bei einem Aktivitätskriterium (AK) unterhalb eines ersten Schwellwertes ($S_1$) der Schätzwert ($\hat{x} = x_0$) aus den Bildsignalwerten (E, F, G ...) des vorangegangenen Fernsehhalbbildes verwendet wird, dadurch gekennzeichnet daß bei Überschreitung eines zweiten Schwellwertes ($S_2$) durch den Betrag des Aktivitätskriteriums (AK) der Schätzwert ($\hat{x} = x_1$) aus den Bildsignalwerten (A, B, C, D) des aktuellen Fernsehhalbbildes verwendet wird, daß bei einem Betrag des Aktivitätskriteriums zwischen den beiden Schwellwerten ($S^1 < AK < S_2$) der Schätzwert aus den umgebenden Bildsignalwerten (A, B, C, D ; E, F, G ...) des aktuellen und des vorangegangenen Fernsehhalbbildes errechnet wird und daß zur Berechnung des Aktivitätskriteriums die Bildsignalwerte (A, B, C, D ; E, F, G ...) mit Faktoren ($\alpha$, $\beta$, $\gamma$, ... ; e, f, g ...) $1/2^n$ (n = 1, 2, 3, 4 ...) multipliziert werden.

2. Verfahren nach Anspruch 1, dadurch gekennzeichnet, daß zur Berechnung des Schätzwertes die Bildsignalwerte (A, B, C, D ; E, F, G ...) mit Faktoren $1/2^n$ (n = 1, 2, 3) multipliziert werden.

3. Verfahren nach Anspruch 2, dadurch gekennzeichnet, daß als Aktivitätskriterium $AK = |(1/4\ B + 1/2\ C + 1/4\ D) - 1/2(1/4\ H + 1/2\ I + 1/4\ J + 1/4\ K + 1/2\ L + 1/4\ M)|$ verwendet wird.

4. Verfahren nach Anspruch 3, dadurch gekennzeichnet, daß bei einem vorgegebenen Wertevorrat (256) der Bildsignalwerte (A, B...) der erste Schwellwert ($S_1$) bei 1/8 und der zweite Schwellwert ($S_2$) bei 1/4 des Wertevorrats liegt.

5. Verfahren nach einem der vorhergehenden Ansprüche, dadurch gekennzeichnet, daß bei einem Aktivitätskriterium (AK) unterhalb des ersten Schwellwertes ($S_1$) als Schätzwert ($\hat{x}$) ein erster Vorhersagewert $x_0 = 1/2(1/4\ E + 1/2\ F + 1/4\ G + A/4\ H + 1/2\ I + 1/4\ J)$ und oberhalb des zweiten Schwellwertes ($S_2$) ein zweiter Vorhersagewert $x_1 = 1/2\ A + 1/8\ B + 1/4\ C + 1/8\ D$ verwendet wird.

6. Verfahren nach einem der vorhergehenden Ansprüche, dadurch gekennzeichnet, daß bei einem Aktivitätskriterium (AK) zwischen den beiden Schwellwerten ($S_1$, $S_2$) als Schätzwert ($\hat{x}$) die Hälfte der Summe der beiden Vorhersagewerte $\hat{x} = 1/2(x_0 + x_1)$ verwendet wird.

7. Verfahren nach einem der Ansprüche 1 bis 6, dadurch gekennzeichnet, daß bei einem Aktivitätskriterium (AK) zwischen den Schwellwerten ($S_1$, $S_2$) als Schätzwert $\hat{x} = \lambda x_0 = (1 - \lambda)\ x_1$ verwendet wird, wobei $\lambda$ eine Funktion des Aktivitätskriteriums (AK) ist.

8. Verfahren nach Anspruch 7, dadurch gekennzeichnet, daß

$$\lambda = 1 - \frac{AK - S_1}{S_2 - S_1}$$

ist ($S_1 \leqslant AK \leqslant S_2$).

9. Verfahren nach einem der Ansprüche 1 und 2, dadurch gekennzeichnet, daß zur Ermittlung des Aktivitätskriteriums (AK) und zur Berechnung des Vorhersagewertes die den aktuellen Abtastwert (x) umgebenden Bildsignalwerte des vorletzten Fernsehhalbbildes mitverwendet werden.

10. Verfahren nach den Ansprüchen 3, 5 und 6, dadurch gekennzeichnet, daß aus den aktuellen Bildsignalwerten (B, C, D) jeweils eine Summe $P = 1/4\ B + 1/2\ C + 1/4\ D$ errechnet wird, daß diese Summe nahezu für die Dauer eines Halbbildes und zusätzlich zweimal einer Fernsehzeile gespeichert wird, und daß aus den gespeicherten Summen (P, Q, R, S) durch Multiplikation mit den Faktoren 1/4 und 1/2 das Aktivitätskriterium (AK) und der Schätzwert ($\hat{x}$) errechnet werden.

11. Schaltungsanordnung zur Realisierung des Verfahrens nach Anspruch 10 mit einem Subtrahierer (1), dem die Abtastwerte (x) zugeführt werden, mit einem an den Ausgang des Subtrahierers (1) angeschlossenen Quantisierer (2), dessen Ausgang über einen ersten Addierer (3), ein Register (10), einen vierten Multiplizierer (16) und einen fünften Addierer (23) an den Subtraktionseingang ($1_2$) des Subtrahierers (1) angeschlossen ist und der Ausgang des fünften Addierers (23) mit dem zweiten Eingang des ersten Addierers (3) verbunden ist, dadurch gekennzeichnet, daß der Ausgang des Registers (10) über ein erstes Zeilenregister (11) mit einem als Rechenschaltung arbeitenden digitalen Filter (12) verbunden ist, daß der Ausgang des digitalen Filters (12) mit einer Reihenschaltung eines Halbbildspeichers (13), eines zweiten Zeilenregisters (14) und eines dritten Zeilenregisters (15) verbunden ist, daß die Ausgänge des zweiten Zeilenregisters (14) und des dritten Zeilenregisters (15) mit den Eingängen eines sechsten Addierers (18) verbunden sind, dessen Ausgang über einen ersten Multiplizierer (19) mit einer Codiersteuerung (19) verbunden ist, daß der Ausgang des Halbbildspeichers (13) und des zweiten Zeilenregisters (14) über einen dritten Addierer (17), einen zweiten Multiplizierer (20) und einen vierten Addierer (22) mit dem zweiten Eingang des fünften Addierers (23) verbunden ist, daß der Ausgang des digitalen Filters (12) außerdem über einen dritten Multiplizierer (21) mit dem zweiten Eingang des vierten Addierers (22) und mit einem zweiten Eingang der Codiersteuerung (9) verbunden ist, und daß

5

Steuerausgänge der Codiersteuerung an den zweiten bis vierten Multiplizierer (20, 21, 16) angeschlossen sind.

12. Schaltungsanordnung nach Anspruch 11, dadurch gekennzeichnet, daß das digitale Filter (12) zwei weitere Register (24, 25) enthält, daß der Eingang (24) des ersten weiteren Registers (24) und der Ausgang des zweiten weiteren Registers (25) über einen siebten Addierer (26) nach einer Multiplikation mit dem Faktor 1/2 an den ersten Eingang eines achten Addierers (28) angeschlossen ist, dessen erster Eingang mit dem Ausgang des ersten weiteren Registers (24) verbunden ist.

**Claims**

1. A method of improving the picture quality of television signals in activity-controlled DPCM-coding, wherein an estimated value ($\hat{x}$) is formed from the surrounding picture signal values (A, B, C, D) of the current scan value (x) and from the picture signal values (E, F, G ...), which surround the current scan value (x), of the preceding television frame, in order to determine the DPCM-signal value ($\Delta x$), wherein an activation criterion (AK) is formed by calculating the amplitude differences from the picture signal values (A, B, C, D), which surround the current scan value (x), of the same television frame and from the picture signal values (E, F, G ...), which surround the current scan value (x), of the preceding television frame and in the event of an activation criterion (AK) which undershoots a first threshold value ($S_1$), the estimated value ($\hat{x} = x_0$) from the picture signal values (E, F, G ...) of the preceding television frame is used, characterised in that when the quantity of the activation criterion (AK) overshoots a second threshold value ($S_2$), the estimated value ($\hat{x} = x_1$) from the picture signal values (A, B, C, D) of the current television frame is used, that when the quantity of the activation criterion is between the two threshold values ($S_1 < AK < S_2$), the estimated value is calculated from the surrounding picture signal values (A, B, C, D ; E, F, G ...) of the current television frame and of the preceding television frame, and that the activation criterion is calculated by multiplying the picture signal values (A, B, C, D ; E, F, G ...) by factors ($\alpha, \beta, \gamma, ...$ ; e, f, g ...) $1/2^n$ (n = 1, 2, 3, 4 ...).

2. A method as claimed in claim 1, characterised in that the estimated value is calculated by multiplying the picture signal values (A, B, C, D ; E, F, G ...) by factors of $1/2^n$ (n = 1, 2, 3).

3. A method as claimed in claim 2, characterised in that AK = $|(1/4\ B + 1/2\ C + 1/4\ D) - 1/2(1/4\ H + 1/2\ I + 1/4\ J + 1/4\ K + 1/2\ L + 1/4\ M)|$ is used as activation criterion.

4. A method as claimed in claim 3, characterised in that with a given value supply (256) of picture signal values (A, B ...), the first threshold value ($S_1$) occurs at 1/8 and the second threshold value ($S_2$) at 1/4 of the supply of values.

5. A method as claimed in one of the preceding claims, characterised in that when an activation criterion (AK) undershoots the first threshold value ($S_1$), a first prediction value $x_0 = 1/2(1/4\ E + 1/2\ F + 1/4\ G + 1/4\ H + 1/2\ I + 1/4\ J)$ is used as estimated value ($\hat{x}$), and when an activation criterion (AK) overshoots the second threshold value ($S_2$) a second prediction value $x_1 = 1/2\ A + 1/8\ B + 1/4\ C + 1/8\ D$ is used as estimated value (x).

6. A method as claimed in one of the preceding claims, characterised in that when an activation criterion (AK) occurs between the two threshold values ($S_1$, $S_2$) half of the sum of the two prediction values $\hat{x} = 1/2(x_0 + x_1)$ is used as estimated value ($\hat{x}$).

7. A method as claimed in one of the claims 1 to 6, characterised in that when an activation criterion (AK) occurs between the threshold value ($S_1$, $S_2$), $\hat{x} = \lambda x_0 + (1 - \lambda)\ x_1$ is used as estimated value $\hat{x}$, where $\lambda$ is a function of the activation criterion (AK).

8. A method as claimed in claim 7, characterised in that

$$\lambda = 1 - \frac{AK - S_1}{S_2 - S_1}$$

($S_1 \leqslant AK \leqslant S_2$).

9. A method as claimed in one of the claims 1 and 2, characterised in that the picture signal values, which surround the current scan value (x), of the last but one television frame are additionally used to determine the activation criterion (AK) and to calculate the prediction value.

10. A method as claimed in the claims 3, 5 and 6, characterised in that a sum $P = 1/4\ B + 1/2\ C + 1/4\ D$ is in each case calculated from the current picture signal values (B, C, D), that this sum is stored virtually for the duration of one frame and additionally twice a television line, and that the activation criterion (AK) and the estimated value ($\hat{x}$) are calculated from the stored sums (P, Q, R, S) by multiplication by the factors 1/4 and 1/2.

11. A circuit arrangement for implementing the method claimed in claim 10, comprising a subtractor (1) which is supplied with the scan values (x), comprising a quantiser (2) which is connected to the output of the subtractor (1) and whose output is connected via a first adder (3), a register (10), a fourth multiplier (16) and a fifth adder (23) to the subtraction input ($1_2$) of the subtractor (1), and where the output of the fifth adder (23) is connected to the second input of the first adder (3) characterised in that the output of the register (10) is connected via a first line register (11) to a digital filter (12) operating as calculating circuit, that the output of the digital filter (12) is connected to a series arrangement of a frame store (13), a second line register (14) and a third line register (15), that the outputs of the second line register (14) and the third line register (15) are connected to the inputs of a sixth adder (18) whose output is connected via a first multiplier (19) to a coder control unit (19), that the output of the frame store (13) and of the second line register (14) are connected via a third adder (17), a second multiplier (20) and a fourth adder (22) to the second input of the fifth adder (23), that the output of the digital filter (12) is further connected via a third multiplier (21) to the second input of the fourth adder (22) and to a second input of the coding control unit (9), and that control outputs of the coding control unit are connected to the second to fourth multipliers (20, 21, 16).

12. A circuit arrangement as claimed in claim 11, characterised in that the digital filter (12) includes two further registers (24, 25), that the input (24) of the first further register (24) and the output of the second further register (25) are connected via a seventh adder (26), following multiplication by the factor 1/2, to the first input of an eighth adder (28) whose first input is connected to the output of the first further register (24).

## Revendications

1. Procédé pour améliorer la qualité de l'image fournie par des signaux de télévision, dans le cas d'un codage de MDIC par modulation différentielle impulsion-code, commandé par l'activité, et selon lequel à partir des valeurs (A, B, C, D), qui entourent la valeur actuelle d'exploration (x), du signal d'image et à partir des valeurs (E, F, G, ...), qui entourent cette valeur actuelle, du signal d'image de la trame précédente de télévision, on calcule une valeur estimée ($\hat{x}$) pour déterminer la valeur ($\Delta x$) du signal (MDIC), et selon lequel à partir des valeurs (A, B, C, D), qui entourent la valeur actuelle d'exploration (x), du signal d'image de cette même trame de télévision et à partir des valeurs (E, F, G ...), qui entourent la valeur actuelle d'exploration (x), du signal d'image de la trame précédente de télévision, on détermine un critère d'activité (AK) au moyen du calcul des différences d'amplitude et, dans le cas où le critère d'activité (AK) est inférieur à une première valeur de seuil ($S_1$), on utilise la valeur estimée ($\hat{x} = x_0$) obtenue à partir des valeurs (E, F, G ...) du signal d'image de la trame précédente de télévision, caractérisé par le fait que dans le cas où la valeur du critère d'activité (AK) dépasse une seconde valeur de seuil ($S_2$), on utilise la valeur estimée ($\hat{x} = x_1$) obtenue à partir des valeurs (A, B, C, D) du signal d'image de la trame actuelle de télévision, que dans le cas où la valeur du critère d'activité se situe entre les deux valeurs de seuil ($S_1 < AK < S_2$), on calcule la valeur estimée à partir des valeurs (A, B, C, D ; E, F, G ...), qui entourent la valeur d'exploration, du signal d'image de la trame actuelle de télévision et de la trame précédente de télévision et que pour calculer le critère d'activité, on multiplie les valeurs (A, B, C, D ; E, F, G ...) du signal d'image par des facteurs ($\alpha$, $\beta$, $\gamma$, ..., e, f, g, ...) $1/2^n$ ($n = 1, 2, 3, 4 ...$).

2. Procédé selon la revendication 1, caractérisé par le fait que pour calculer la valeur estimée, on multiplie les valeurs (A, B, C, D ; E, F, G ...) du signal d'image par des facteurs $1/2^n$ ($n = 1, 2, 3$).

3. Procédé suivant la revendication 2, caractérisé par le fait qu'on utilise comme critère d'activation
$AK = |(1/4 B + 1/2 C + 1/4 D) - 1/2(1/4 H + 1/2 I + 1/4 J + 1/4 K + 1/2 L + 1/4 M)|$.

4. Procédé suivant la revendication 3, caractérisé par le fait que dans le cas d'un nombre prédéterminé (256) de valeurs (A, B ...) du signal d'image, la première valeur de seuil ($S_1$) est égale à 1/8 et la seconde valeur de seuil ($S_2$) est égale à 1/4 du nombre de valeurs.

5. Procédé suivant l'une des revendications précédentes, caractérisé par le fait que dans le cas où le critère d'activité (AK) est inférieur à la première valeur de seuil ($S_1$), on utilise comme valeur estimée ($\hat{x}$) une première valeur prévisionnelle $x_0 = 1/2(1/4 E + 1/2 F + 1/4 G + 1/4 H + 1/2 I + 1/4 J)$, dans où le critère d'activité est supérieur à la seconde valeur de seuil ($S_2$), on utilise comme valeur estimée (x) une seconde valeur prévisionnelle $x_1 = 1/2 A + 1/8 B + 1/4 C + 1/8 D$.

6. Procédé suivant l'une des revendications précédentes, caractérisé par le fait que dans le cas où le critère d'activité (AK) se situe entre les deux valeurs de seuil ($S_1$, $S_2$) on utilise comme valeur estimée ($\hat{x}$) la moitié de la somme des deux valeurs prévisionnelles $\hat{x} = 1/2(x_0 + x_1)$.

7. Procédé suivant l'une des revendications 1 à 6, caractérisé par le fait que dans le cas où le critère d'activité (AK) se situe entre les valeurs de seuil ($S_1$, $S_2$), on utilise comme valeur estimée $\hat{x} = \lambda x_0 + (1 - \lambda) x_1$, $\lambda$ étant une fonction du critère d'activité (AK).

8. Procédé suivant la revendication 7, caractérisé par le fait que l'on a

$$\lambda = 1 - \frac{AK - S_1}{S_2 - S_1}$$

($S_1 \leq AK \leq S_2$).

9. Procédé suivant l'une des revendications 1 et 2, caractérisé par le fait que pour déterminer le critère d'activité (AK) et pour calculer la valeur prévisionnelle, on utilise conjointement les valeurs, entourant la valeur actuelle d'exploration (x), du signal d'image de l'avant-dernière trame de télévision.

10. Procédé suivant les revendications 3, 5 et 6, caractérisé par le fait qu'on calcule respectivement une somme $P = 1/4 B + 1/2 C + 1/4 D$ à partir des valeur actuelles (B, C, D) du signal d'image, qu'on

**0 141 969**

mémorise cette somme approximativement pour la durée d'une trame plus le double d'une ligne de télévision, et que l'on calcule, à partir de la somme mémorisée (P, Q, R, S), le critère d'activité (AK) et la valeur estimée ($\hat{x}$) par multiplication avec les facteurs 1/4 et 1/2.

11. Montage pour la mise en œuvre du procédé suivant la revendication 10, comportant un soustracteur (1), auquel des valeurs d'exploration (x) sont envoyées, un quantificateur (2) raccordé à la sortie du soustracteur (1) et dont la sortie est raccordée à l'entrée de soustraction ($1_2$) du soustracteur (1), par l'intermédiaire d'un premier additionneur (3), d'un registre (10), d'un quatrième multiplicateur (16) et d'un cinquième additionneur (23), et que la sortie du circuit additionneur (23) est reliée à la seconde entrée du premier additionneur (3), caractérisé par le fait que la sortie du registre (10) est reliée par l'intermédiaire d'un premier registre de lignes (11), à un filtre numérique (12) travaillant en tant que circuit de calcul, que la sortie du filtre numérique (12) est reliée à un circuit série formé d'une mémoire de trames (13), d'un second registre de lignes (14) et d'un troisième registre de lignes (15), que les sorties du second registre de lignes (14) et du troisième registre de lignes (15) sont reliées aux entrées d'un sixième additionneur (18), dont la sortie est reliée par l'intermédiaire d'un premier multiplicateur (19) à un dispositif (19) de commande de codage, que la sortie de la mémoire de trames (13) et du second registre de lignes (14) est reliée par l'intermédiaire d'un troisième additionneur (17), d'un second multiplicateur (20) et d'un quatrième additionneur (22) à la seconde entrée du cinquième additionneur (23), que la sortie du filtre numérique (12) est en outre reliée par l'intermédiaire d'un troisième multiplicateur (21) à la seconde entrée du quatrième additionneur (22) et à une seconde entrée du dispositif (9) de commande de codage, et que des sorties de commande du dispositif de commande de codage sont raccordées aux second, troisième et quatrième multiplicateurs (20, 21, 16).

12. Montage suivant la revendication 11, caractérisé par le fait que le filtre numérique (12) contient deux registres supplémentaires (24, 25), que l'entrée (24) du premier registre supplémentaire (24) et la sortie du second registre supplémentaire (25) sont reliées par l'intermédiaire d'un septième additionneur (26), après multiplication par le facteur 1/2, à la première entrée d'un huitième additionneur (28), dont la première entrée est reliée à la sortie du premier registre supplémentaire (24).

8

FIG 1

FIG 2

FIG 3

# FIG 4

# FIG 5